Europäisches Patentamt

European Patent Office

Office européen des brevets

(11) Veröffentlichungsnummer: **0 391 189**
**A2**

(12) **EUROPÄISCHE PATENTANMELDUNG**

(21) Anmeldenummer: **90105658.0**

(51) Int. Cl.⁵: **B32B 27/40, B32B 27/08**

(22) Anmeldetag: **24.03.90**

(30) Priorität: **06.04.89 DE 3911066**

(43) Veröffentlichungstag der Anmeldung:
**10.10.90 Patentblatt 90/41**

(84) Benannte Vertragsstaaten:
**DE FR GB IT NL**

(71) Anmelder: **BAYER AG**

**D-5090 Leverkusen 1 Bayerwerk(DE)**

(72) Erfinder: **Wank, Joachim, Dipl.-Ing.**
**Zülpicher Strasse 7**
**D-4047 Dormagen 5(DE)**
Erfinder: **Waldenrath, Werner, Dipl.-Ing.**
**Maastrichter Strasse 40**
**D-5000 Köln 1(DE)**
Erfinder: **Uerdingen, Walter, Dr.**
**Humperdinckstrasse 41**
**D-5090 Leverkusen 1(DE)**
Erfinder: **Freitag, Dieter, Dr.**
**Hasenheide 10**
**D-4150 Krefeld 1(DE)**
Erfinder: **Braese, Hans Eberhard, Dipl.-Ing.**
**Käthe-Kollwitz-Strasse 3**
**D-5000 Köln 71(DE)**

(54) Mehrschichtfolien für Crash-Pad-Anwendung.

(57) Gegenstand der vorliegenden Erfindung sind Mehrschichtfolien aus thermoplastischen Folien, zäh-elastischen Polyurethanfolien und gegenbenenfalls einer Siegelschicht sowie die Verwendung dieser Mehrschichtfolien zur Herstellung von Crash-Pad-Folien, also als Außenhaut für Kfz-Armaturen.

EP 0 391 189 A2

## Mehrschichtfolien für Crash-Pad-Anwendung

Mehrschichtfolien sind bekannt. Sie werden verwendet für Lebensmittelverpackung, Verpackung medizinischer Artikel, Sportartikel sowie für Lautsprecherkonusse (siehe beispielsweise DE-OS 3 722 832).

Mehrschichtfolien werden durch Coextrusion, Extrusionsbeschichtung sowie Laminieren hergestellt.

Für Crashpadanwendungen, also als Außenhaut für Kfz-Armaturen, haben sich bisher ausschließlich Folien auf Basis von PVC, das mit den unterschiedlichsten Additiven modifiziert wird, bewährt.

Die Anforderungen an derartige Folien sind bisher
- gute Prägbarkeit
- gute Verformbarkeit der geprägten Folie
- beständig gegen übliche Reinigungsmittel
- Haftung zum Gehäusematerial
- Schlagzähigkeit
- keine Ausgasung (Fogging)

Mit Ausnahme von Fogging werden alle bisherigen Anforderungen von entsprechend modifizierter PVC-Folie erfüllt.

Neue Forderungen, nach der eine Crash-Pad-Folie eine Temperaturbeständigkeit von $130^\circ$ C haben muß, können von PVC nicht mehr erfüllt werden.

Um diese neuen Forderungen zu erfüllen, wurden zahlreiche Materialien getestet, jedoch ohne den gewünschten Erfolg.

Überraschenderweise wurde nun gefunden, daß die erfindungsgemäßen Folien sowohl die o. a. Forderungen als auch die Forderung nach Temperaturbeständigkeit erfüllen.

Gegenstand der vorliegenden Erfindung sind Mehrschichtfolien einer Dicke von 0,8 mm bis 2 mm, bestehend aus

A) einer 0,3 mm bis 1,8 mm dicken, thermoplastischen Folie, deren E-Modul im Bereich $-40^\circ$ C bis $+130^\circ$ C bei 1.000 bis 20.000 MPa liegt und eine Dauer-Temperaturbeständigkeit von $\geq 130^\circ$ C aufweist,

B) einer 0,4 mm bis 1,5 mm dicken, zählelastischen Polyurethanfolie, deren Schubmodul G im Temperaturbereich $-40^\circ$ C bis $+130^\circ$ C zwischen $10^\circ$ MPa und $10^3$ MPa liegt und gegebenenfalls

C) einer 0,05 mm bis 0,1 mm dicken, thermoplastischen Siegelschicht, deren mechanischer Verlustfaktor tan $\delta$ im Bereich $10^{-2}$ bis $10^2$ MPa liegt.

Gegenstand der vorliegenden Erfindung ist außerdem die Verwendung der erfindungsgemäßen Mehrschichtfolien zur Herstellung von Crash-Pad-Folien.

Die dünneren Mehrschichtfolien gemäß EP-OS 0 295 494 (Le A 25 346) oder DE-OS 3 722 832 sind dafür nicht geeignet, ebensowenig Mehrschichtfolien auf Basis eines Polyurethanklebers [s. beispielsweise DE-PS 3 010 143 (Le A. 20 254) beziehungsweise US-PS 4 368 231].

Erfindungsgemäß geeignete Folien gemäß Komponente A) sind solche aus bekannten thermoplastischen Kunststoffen wie aromatischen Polycarbonaten, aromatischen Polyarylsulfonen oder Polyphenylensulfiden.

Erfindungsgemäß besonders geeignete Folien A) sind solche aus thermoplastischen, aromatischen Polycarbonaten mit Molekulargewichten $\overline{M}_w$ (Gewichtsmittel) von 10.000 bis 200.000, vorzugsweise von 15.000 bis 100.000 und insbesondere von 15.000 bis 50.000 ( $\overline{M}_w$ ermittelt aus der relativen Viskosität $\eta_{rel}$ in $CH_2Cl_2$ bei $20^\circ$ C bei einer Konzentration von 0,5 g pro 100 ml). Weitere erfindungsgemäß geeignete Folien A) aus thermoplastischen Kunststoffen sind solche aus bekannten, thermoplastischen Polyarylsulfonen, welche linear (vergl. DE-OS 27 35 144) oder verzweigt (vergl. DE-OS 27 35 092 und DE-OS 23 05 413) sein können.

Besonders geeignete lineare Polyarylsulfone sind bekannte aromatische Polysulfone oder Polyethersulfone mit Molekulargewichten $\overline{M}_w$ (Gewichtsmittel gemessen durch Lichtstreuung) zwischen etwa 15.000 und etwa 55.000, vorzugsweise zwischen etwa 20.000 und etwa 40.000. Solche Polyarylsulfone sind beispielsweise in DE-OS 17 19 244 und US-PS 33 65 517 beschrieben.

Geeignete verzweigte Polyarylsulfone sind insbesondere die verzweigten Polyarylethersulfone gemäß DE-OS 23 05 413 und US-PS 39 60 815, deren Molekulargewicht $\overline{M}_w$ zwischen etwa 15.000 und etwa 50.000, vorzugsweise zwischen etwa 20.000 und 40.000, liegen.

Für nähere Einzelheiten sei auf DE-AS 30 10 143 verwiesen.

Erfindungsgemäß geeignete Folien der Komponente B) sind Polyester-, Polyether- und Polyethercarbonat-Urethane.

Geeignete Polyetherurethane können hergestellt werden gemäß DE-PS 2 302 564. Geeignete Polyesterurethane können gemäß DE-OS 2 842 806 erhalten werden und geeignete Polyethercarbonat-Urethane gemäß DE-OS 2 248 382.

Besonders bevorzugt sind Polyethercarbonat-Urethane mit einem spezifischen Gewicht von 1,13 bis 1,17, bevorzugt 1,15 g/cm³.

Erfindungsgemäß geeignete thermoplastische Siegelschichten gemäß Komponente C) sind solche auf Basis von Nitro cellulose bzw. einer bei Raumtemperatur klebfreien Polyurethanschicht auf Basis aliphatischer oder aromatischer Polyurethane, vorzugsweise aliphatischer Polyether-Urethane.

Zur Herstellung der erfindungsgemäß geeigneten Siegelschichten C) können wäßrige, zu transparenten Filmen auftrocknende Dispersionen von vorzugsweise linearen Polyesterpolyurethanen, die gegebenenfalls ein höherfunktionelles Polyisocyant als Vernetzer enthalten, verwendet werden. Geeignete Polyurethandispersionen sind beispielsweise solche aus linearen Polyesterdiolen, aromatischen oder aliphatischen Diisocyanaten und gegebenenfalls üblichen Kettenverlängerungsmitteln, die unter Mitverwendung von ionischen Aufbaukomponenten entsprechend der Lehre der US-PS 34 79 310 oder der DE-AS 14 95 847 hergestellt worden sind. Sehr gut geeignet sind auch wäßrige Dispersionen von Carboxylat- und Sulfonatgruppen aufweisenden, vorzugsweise linearen Polyesterpolyurethanen, wie sie gemäß DE-OS 28 04 609 erhalten werden können. Im Falle der Verwendung von organischen Lösungen von vorzugsweise linearen Polyesterpolyurethanen kommen vorzugsweise Lösungen von nicht-ionischen linearen Polyesterpolyurethanen in geeigneten Lösungsmitteln in Betracht. Bei diesen Polyurethanen handelt es sich vorzugsweise um Umsetzungsprodukte von

a) aromatischen Diisocyanaten wie 2,4- und/oder 2,6-Diisocyanatotoluol, 4,4-Diisocyanatodiphenylmethan, Hexamethylendiisocyanat, Isophorondiisocyanat oder 1,5-Diisocyanatonaphthalin oder deren Gemische mit

b) Polyesterdiolen des Molekulargewichtsbereichs ($\overline{M}_w$) 1.000 bis 4.000, insbesondere auf Basis von Adipinsäure und geeigneten Glykolen wie Ethylenglykol, 1,4-Dihydroxybutan, 1,6-Dihydroxyhexan und deren Gemische und gegebenenfalls

c) Kettenverlängerungsmitteln, beispielsweise den zuletztgenannten Glykolen, wobei die Reaktionspartner unter Einhaltung eines NCO/OH-Äquivalentverhältnisses von 0,9 : 1 bis 1 : 1,1, vorzugsweise 0,95 : 1 bis 1 : 1 zum Einsatz gelangen, und wobei pro Mol Polyesterdiol gegebenenfalls 0,1 bis 2 Mol Kettenverlängerer bzw Kettenverlängerergemisch zum Einsatz gelangen.

Geeignete Lösungsmittel für derartige Polyesterpolyurethane sind beispielsweise Ethylacetat, Butylacetat, Methylethylketon, Methylisobutylketon oder aus derartigen Lösungsmitteln bestehende Gemische. Die Dispersionen oder Lösungen werden im allgemeinen mit einem Feststoffgehalt von 10 bis 40 Gew.-% verwendet. Oft kann es zweckmäßig sein, den genannten Lösungen untergeordnete Mengen eines höherfunktionellen Polyisocyanats, beispielsweise an Tris-(6-isocyanathexyl)-biuret einzuverleiben, um die mechanischen Eigenschaften des letztendlich erhaltenen Polyurethanfilms zu verbessern.

Erfindungsgemäß ebenfalls geeignete thermoplastische Siegelschichten C) sind solche aus Nitrocellulose.

Die Herstellung des Verbundes aus der thermoplastischen Folie A) und der thermoplastischen Polyurethanschicht B) kann entweder durch Coextrusion der beiden Materialien mittels einer thermisch getrennten 2-Kanalbreitschlitzdüse erfolgen oder durch Extrusionsbeschichtung der Polyurethanfolie B) mit der Schmelze des thermoplastischen Kunststoffes A).

Die Schmelze des Coextrudates bzw. die schmelzbeschichtete Polyurethanfolie werden über Kühlwalzen abgezogen und aufgewickelt.

Das Aufbringen der Siegelschicht C) auf die Außenseite der thermoplastischen Folie A) erfolgt in bekannter Weise, beispielsweise durch Rollcoater-Beschichtung, Curtain-coating oder durch Siebdruck. Nach Auftragen der Siegelschicht erfolgt das Ausdampfen des Lösungsmittels bzw. Wassers in einem konventionellen Trockenofen bei Temperaturen zwischen 40 und 100°C. Bei Verwendung einer wäßrigen Siegelschicht ist die Verwendung eines Mikrowellentrockners besonders vorteilhaft.

Beispiele

Beispiel 1

Eine Folie aus aromatischem Polycarbonat auf Bisphenol A mit einem $\overline{M}_w$ von 30.000 (ermittelt über $\eta_{rel}$ in $CH_2Cl_2$ bei 20°C und einer Konzentration von 0,5 g/100 ml) mit einer Dicke von 600 $\mu$m wird in an sich bekannter Weise im Extrusionsbeschichtungsverfahren mit der Schmelze eines Polyethercarbonat-Urethans, dessen Dichte 1,15 g/$cm^3$ beträgt, beschichtet, so daß die Gesamtdicke des Verbundes 1.100 $\mu$m beträgt. Um eine Strukturierung der Polyethercarbonat-Urethanschicht zu erreichen, ist die Abzugswalze, auf der die Schmelze des Polyethercarbonat-Urethans aufläuft, geprägt.

Die so hergestellte, geprägte Verbundfolie wird in an sich bekannter Weise im Thermoformverfahren verformt.

Beispiel 2

Eine Folie aus thermoplastischem Polyester-Urethan, mit einer Dichte von 1,20 g/$cm^3$ und einer Dicke von 400 $\mu$m wird in an sich bekannter Weise mit der Schmelze eines Polyarylsulfons mit einem

$\overline{M}_w$ von 40.000 (gemessen mittels Lichtstreuung) beschichtet, so daß eine Dicke des Gesamtverbundes von 900 μm erhalten wird. Bei diesem Verfahren hat die Pressen-Walze des Abzugssystems eine geprägte, die Kühlwalze eine glatte Oberfläche, so daß ebenfalls ein Verbundsystem erhalten wird, bei dem die Polyester-Urethanfolie eine geprägte Oberfläche hat. Zur Verbesserung der Haftung zum späteren Kernmaterial, wird die freie Polyarylsulfonoberfläche mit einer wässrigen Dispersion eines Polyesterpolyurethans mit einer Dicke von 20 μm beschichtet. Die so hergestellte Folie wird in an sich bekannter Weise im Thermoformverfahren verformt.

Die besonderen Eigenschaften dieses erfindungsgemäßen Systems zeichnen sich aus durch
- hohe Temperaturbeständigkeit (bis 140°C)
- hohe Schlagzähigkeit im Temperaturbereich -40°C bis +140°C
- hohe Abriebfestigkeit
- sehr gute Verformbarkeit
- sehr gute Verbundhaftung zum Kernmaterial
- Fogging-Freiheit

## Ansprüche

1. Mehrschichtfolien einer Dicke von 0,8 bis 2 mm, bestehend aus

A) einer 0,3 mm bis 1,8 mm dicken, thermoplastischen Folie, deren E-Modul im Bereich -40°C bis +130°C bei 1.000 bis 20.000 MPa liegt und eine Dauer-Temperaturbeständigkeit von ≧130°C aufweist,

B) einer 0,4 mm bis 1,5 mm dicken, zähelastischen Polyurethanfolie, deren Schubmodul G im Temperaturbereich -40°C bis +130°C zwischen $10^0$ MPa und $10^3$ MPa liegt
und gegebenenfalls

C) einer 0,05 mm bis 0,1 mm dicken, thermoplastischen Siegelschicht, deren mechanischer Verlustfaktor tan δ im Bereich $10^{-2}$ bis $10^2$ MPa liegt.

2. Folie gemäß Anspruch 1, dadurch gekennzeichnet, daß die thermoplastische Folie A) aus Polycarbonat auf Basis von Bisphenol A mit einem $\overline{M}_w$ von 15.000 bis 50.000 (gemessen mittels $\eta_{rel}$ bei 20°C und 0,5 g/ 100 ml $CH_2Cl_2$) besteht.

3. Folie gemäß Anspruch 1 und 2, dadurch gekennzeichnet, daß die zäh-elastische, thermoplastisch verarbeitbare Folie B) aus einem Polyethercarbonat-Urethan mit einem spez. Gewicht von 1,13 bis 1,17, vorzugsweise 1,15 g/mm³ besteht.

4. Folie gemäß Anspruch 1, dadurch gekennzeichnet, daß die Siegelschicht C) aus einem aliphatischen Polyetherurethan besteht.

5. Verwendung der Folie gemäß Anspruch 1 bis 4 zur Herstellung von Crash-Pad-Folien, also als Außenhaut für Kfz-Armaturen.